(19) Europäisches Patentamt

European Patent Office

Office européen des brevets

(11) **EP 0 898 119 A2**

(12) **EUROPÄISCHE PATENTANMELDUNG**

(43) Veröffentlichungstag:
24.02.1999 Patentblatt 1999/08

(51) Int. Cl.⁶: **F23N 1/08**

(21) Anmeldenummer: 98115150.9

(22) Anmeldetag: 12.08.1998

(84) Benannte Vertragsstaaten:
AT BE CH CY DE DK ES FI FR GB GR IE IT LI LU MC NL PT SE
Benannte Erstreckungsstaaten:
AL LT LV MK RO SI

(30) Priorität: 16.08.1997 DE 19735558

(71) Anmelder: **ROBERT BOSCH GMBH**
**70442 Stuttgart (DE)**

(72) Erfinder:
• **Weil, Olaf**
**3800 Aveiro (PT)**
• **Hahn, Klaus-Wolfgang**
**73278 Schlierbach (DE)**

(54) **Vorrichtung und Verfahren zur Brauchwassererwärmung**

(57) Es werden eine Vorrichtung und ein Verfahren zur Brauchwassererwärmung vorgeschlagen. Ein Wärmeerzeuger (10) erwärmt Wasser, dessen Solltemperatur (Ts) über einen Sollwertgeber (24) vorgebbar ist. Ein Auslauftemperatursensor (16) erfaßt die Auslauftemperatur (Ta) und ein Durchflußsensor (20) den Durchfluß (Q) des Wassers. Vorrichtung und Verfahren zeichnen sich dadurch aus, daß zumindest ein Parameter (P) des Wärmeerzeugers (10) ermittelt ist aus Auslauftemperatur (Ta) und Durchfluß (Q).

Fig. 1

**Beschreibung**

Stand der Technik

Die Erfindung geht aus Von einer Vorrichtung und einem verfahren zur Brauchwassererwärmung nach der Gattung der unabhängigen Ansprüche. Aus EP 0 358 173 B1 ist bereits ein Warmwasserversorgungsgerät bekannt. Der maximal zulässige Wasserdurchfluß wird in Abhängigkeit von der Vorgegebenen Solltemperatur, Kaltwassertemperatur und den Kenndaten des Wärmeerzeugers vorgegeben. Der Durchfluß wird solange reduziert, bis Solltemperatur und Auslauftemperatur übereinstimmen. Wenn sich trotz ständiger Verringerung des Durchflusses eine bleibende Temperaturdifferenz einstellt, schließt die Steuerung auf einen defekten Zustand des Geräts. Der zulässige Durchfluß hängt unmittelbar von den Kenndaten des Wärmeerzeugers ab. Verändern sich diese im Laufe der Zeit wegen Alterung, Verkalkung oder Verschleiß, ist eine sichere Erreichung der gewünschten Auslauftemperatur trotz Durchflußbegrenzung nicht gewährleistet. Wünschenswert ist eine ständige Erfassung und Anpassung der aktuellen Kenndaten, um die Güte der Regelung zu verbessern.

Vorteile der Erfindung

Die erfindungsgemäße Vorrichtung zur Brauchwassererwärmung enthalt einen Wärmeerzeuger zum Erwarmen des Wassers. Ein Sollwertgeber gibt eine Solltemperatur des auslaufenden Wassers vor. Ein Auslauftemperatursensor erfaßt eine Auslauftemperatur, ein Durchflußsensor einen Durchfluß des Wassers. Die erfindungsgemäße Vorrichtung zeichnet sich dadurch aus, daß zumindest ein Parameter des Wärmeerzeugers aus der Auslauftemperatur und dem Durchfluß des Wassers ermittelt ist. Wird der Wärmeerzeuger mit maximaler Leistung betrieben, läßt sich aus der Auslauftemperatur und dem Durchfluß des Wassers mit hinreichender Genauigkeit als Parameter die maximale Leistung für diesen Betriebszustand ermitteln. Der Parameter dient als Ausgangsbasis, um kenndatenabhängige Stellgrößen auch für andere Betriebszustände an den aktuellen Zustand des Wärmeerzeugers anzupassen. Der Parameter wird bei zukünftigen Regelungsvorgängen berücksichtigt. Beispielsweise läßt sich der maximale Durchfluß in Abhängigkeit von der maximalen Leistung des Wärmeerzeugers begrenzen, um sicher die gewünschte Auslauftemperatur zu erreichen. Die Genauigkeit und die Güte der Regelung verbessern sich dank des adaptiven Parameters. Der Parameter ist ein Maß für den Zustand des Wärmeerzeugers, anhand dessen auf Verschleiß und anstehende Wartung geschlossen wird. Die automatische Parameterermittlung stellt auch für unterschiedliche Ausführungsformen des Wärmeerzeugers der Regelung die jeweils passenden Regelkenngrößen zur Verfügung. Auf ein einziges Steuerprogramm für unterschiedliche Wärmeerzeuger kann zurückgegriffen werden, wodurch sich die Variantenvielfalt reduziert. Durch eine gezielte Auswertung des Parameters kann die Brauchwassererzeugung fehlertolerant ausgelegt werden, da der Parameter Hinweise auf einen eventuell kritischen Betriebszustand gibt, der gezielt unterbunden wird.

Eine zweckmäßige Weiterbildung sieht einen Einlauftemperatursensor vor, der eine Einlauftemperatur erfaßt zur Mithilfe bei der Ermittlung des Parameters. Die maximale Leistung des Wärmeerzeugers als Parameter hängt von der Temperaturdifferenz von Auslauftemperatur und Einlauftemperatur ab. Daher erhöht sich die Genauigkeit der Parameterermittlung, wenn die Einlauftemperatur genau erfaßt wird.

In einer vorteilhaften Weiterbildung sind Auslauftemperatur, Einlauftemperatur und Durchfluß zur Ermittlung des Parameters dann erfaßt, wenn Solltemperatur und Auslauftemperatur übereinstimmen. Dann ist gewährleistet, daß sich bei diesen Betriebsbedingungen auch tatsächlich die gewünschte Solltemperatur einstellt.

In einer weiteren Ausgestaltung werden Auslauftemperatur, Einlauftemperatur und Durchfluß zur Ermittlung des Parameters dann erfaßt, wenn sich die Auslauftemperatur im eingeschwungenen Zustand befindet. Damit führen Überschwinger des Temperaturverlaufs nicht zu einem falschen Erfassungszeitpunkt der Betriebszustände. Auch instabile Zustände, die im Normalbetrieb nicht auftreten sollen, bewirken keine Veränderung des aktuell gültigen Parametersatzes.

In einer vorteilhaften Ausgestaltung ist ein Durchflußsteller vorgesehen, der den Durchfluß begrenzt, um eine Übereinstimmung von Solltemperatur und Auslauftemperatur zu erzielen. Falls die Leistung des Wärmeerzeugers nicht ausreichen sollte, bei einem relativ hohen Durchfluß die gewünschte Solltemperatur zu erreichen, ist dies bei einem Eingriff in die zulässige Durchflußmenge möglich. Betriebsgrößen können exakt so eingestellt werden, daß sich die Brauchwassererwärmung sowohl im stationären Zustand befindet als auch eine Übereinstimmung von Solltemperatur und Auslauftemperatur gewährleistet ist. Die dann erfaßten Größen bieten zuverlässige Rückschlüsse auf den Parameter des Wärmeerzeugers.

In einer zweckmäßigen Weiterbildung ist eine Brennstoffzufuhr des Wärmeerzeugers in Abhängigkeit von dem Parameter angesteuert. Die Qualität der Leistungsregelung laßt sich erheblich verbessern, da dank des aktuellen Parameters der genaue Zusammenhang zwischen Brennstoffzufuhr und hervorgerufener Temperaturerhöhung bekannt ist. Die regelstreckenabhängigen Regelparameter können speziell auf den aktuellen Betriebsfall abgestimmt werden.

In einer vorteilhaften Ausgestaltung ist der Durchflußsteller im Sinne eines Durchflußsollwerts angesteuert, der von dem Parameter abhängt. Da der Parameter die Maximalleistung des Wärmeerzeugers erfaßt, läßt sich der maximal zulässige Durchfluß in Abhängigkeit von dem Parameter so wählen, daß die vom Benutzer gewünschte Solltemperatur sich zuverlässig einstellt.

In einer weiteren Ausführung ist der Parameter mit einem Grenzwert verglichen. Bei dessen Unterschreiten wird auf einen Fehler des Wärmeerzeugers geschlossen. Mit Hilfe des Grenzwerts läßt sich ein maximal zulässiges Toleranzband definieren, bei dessen Verlassen ein betriebssicherer Zustand des Wärmeerzeugers nicht mehr garantiert werden kann. Das Überschreiten läßt sich zudem mit einer Störmeldung verbinden, die den Benutzer auf notwendige Wartungsmaßnahmen hinweist. Rechtzeitige Instandhaltungsarbeiten sichern die Funktionstüchtigkeit der Brauchwassererwärmung.

Bei dem erfindungsgemäßen Verfahren zur Brauchwassererwärmung erwärmt ein Wärmeerzeuger Wasser. Über einen Sollwertgeber wird eine Solltemperatur des auslaufenden Wassers vorgegeben. Auslauftemperatur und Durchfluß des Wassers werden erfaßt. Das Verfahren zeichnet sich dadurch aus, daß ein Parameter des Wärmeerzeugers aus Auslauftemperatur und Durchfluß ermittelt wird. Mit Hilfe des erfindungsgemäßen Verfahrens wird der von dem jeweiligen Wärmeerzeuger abhängende Parameter individuell erfaßt. Regelkenngrößen oder eine Begrenzung der maximal zulässigen Durchflußmenge werden auf diesen Parameter abgestimmt.

In einer zweckmäßigen Weiterbildung wird in einem ersten Schritt der Wärmeerzeuger mit vorzugsweise maximaler Leistung betrieben. In einem zweiten Schritt werden Solltemperatur und Auslauftemperatur miteinander verglichen. Bei Übereinstimmung von Solltemperatur und Auslauftemperatur werden Auslauftemperatur, Einlauftemperatur und Durchfluß erfaßt zur Ermittlung des Parameters. Diese Vorgehensweise stellt sicher, daß bei diesen Betriebsparametern die Solltemperatur sicher erreicht werden kann. Der ermittelte Parameter repräsentiert die maximale Leistung des Wärmeerzeugers. Eine Überwachung der maximalen Leistung trägt zur sicheren Erkennung einer Veränderung des Wärmeerzeugers bei.

Besonders vorteilhaft ist es, Vorrichtung und Verfahren miteinander zu kombinieren.

Weitere zweckmäßige Weiterbildungen aus weiteren abhängigen Ansprüchen ergeben sich aus der Beschreibung.

Zeichnung

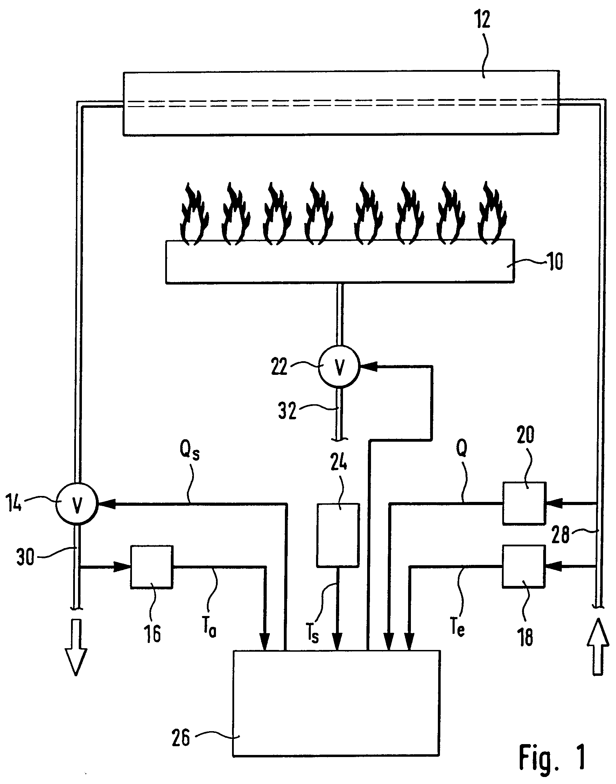

Ausführungsbeispiele sind in der Zeichnung dargestellt und in der nachfolgenden Beschreibung näher erläutert. Es zeigen Figur 1 eine schematisch dargestellte Vorrichtung zur Brauchwassererwärmung, Figur 2 mögliche zeitliche Verläufe von Temperatur und Durchflußsollwert, Figur 3 ein Flußdiagramm sowie Figur 4 einen Zusammenhang zwischen Durchfluß und Temperaturdifferenz von Auslauftemperatur und Einlauftemperatur in Abhängigkeit von bestimmten Parametern.

Beschreibung der Ausführungsbeispiele

Ein Wärmeerzeuger 10 wird über eine Brennstoffzufuhr 32 und ein Ventil 22 mit Brennstoff versorgt. Er führt einem Wärmetauscher 12 Wärme zu, der über einen Einlauf 28 zufließendes Wasser erhitzt, das dann einem Auslauf 30 entnommen werden kann. Ein Einlauftemperatursensor 18 erfaßt eine Einlauftemperatur Te, ein Durchflußsensor 20 einen Durchfluß Q. Eine über einen Sollwertgeber 24 einstellbare Solltemperatur Ts ist ebenso einer Signalverarbeitung 26 zugeführt wie eine Auslauftemperatur Ta, die ein Auslauftemperatursensor 16 bereitstellt. Die Signalverarbeitung 26 gibt einen Durchflußsollwert Qs an einen Durchflußsteller 14 ab. Der Signalverarbeitung 26 sind darüberhinaus Durchfluß Q und Einlauftemperatur Te zugeführt. Sie beeinflußt die Stellung des Ventils 22.

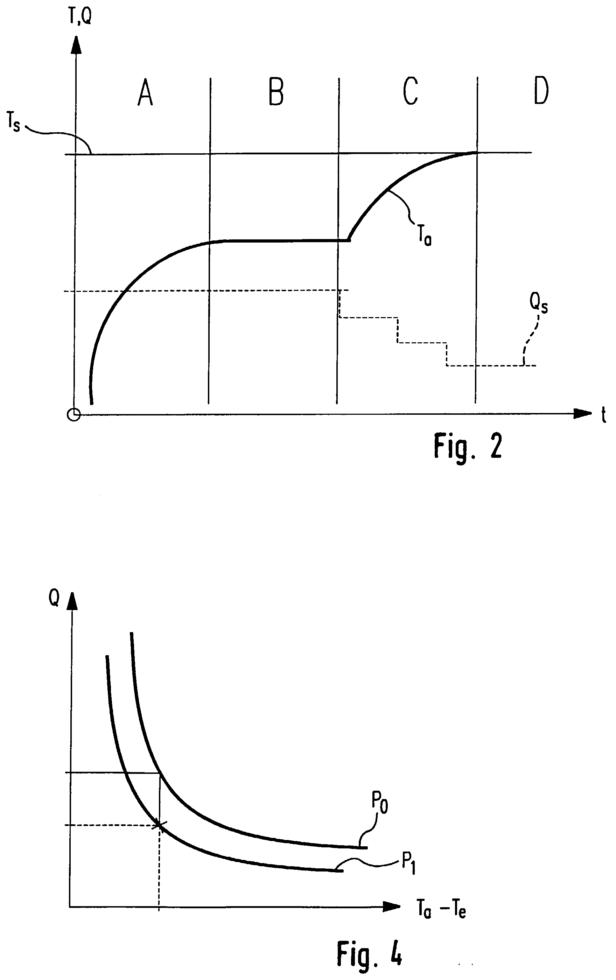

Figur 2 läßt sich der zeitliche Verlauf der Auslauftemperatur Ta entnehmen. Während des Bereichs A steigt sie an, um einen stationären Wert anzunehmen, der von der Solltemperatur Ts abweicht, Bereich B. Hierauf wird der Durchflußsollwert Qs schrittweise reduziert, weshalb die Auslauftemperatur Ta ansteigt, Bereich C. Diese erreicht die Solltemperatur Ts, Bereich D.

Figur 4 zeigt den Zusammenhang zwischen Durchfluß Q und der Temperaturdifferenz von Auslauftemperatur Ta und Einlauftemperatur Te. Die eine Kennlinie ist einem ersten Parameter P0, die andere einem zweiten Parameter P1 zugeordnet. Der Parameter P steht beispielsweise für die maximale Leistung des Wärmeerzeugers 10, für den skizzierten Fall ist der erste Parameter P0 größer als der zweite Parameter P1.

Der Benutzer stellt über den Sollwertgeber 24 die gewünschte Solltemperatur Ts ein. Die Signalverarbeitung 26 regelt in Abhängigkeit von der Solltemperatur Ts die Brennstoffzufuhr 32 oder den Durchflußsteller 14, um ein Überzapfen des Systems auszuschließen. Zur Ermittlung des Parameters P ist es notwendig, Auslauftemperatur Ta, Einlauftemperatur Te und Durchfluß Q zu bestimmen. Die hierzu notwendigen Temperatursensoren 16, 18 sind ebenso wie die Durchflußsensoren 20 hinlänglich bekannt und bedürfen keiner weiteren Erläuterung.

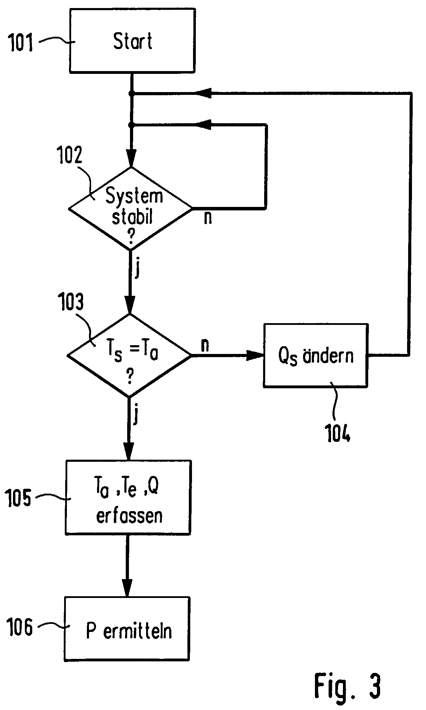

Die Signalverarbeitung 26 ruft zyklisch, beispielsweise bei jedem Start, die in Figur 3 dargestellte Prozedur zur Parameterermittlung auf. Dieses Programm wird in einem ersten Schritt 101 aktiviert, der der Initialisierung dient. Das Ventil 22 ist in einen bekannten Betriebszustand zu versetzen, der mit einer bekannten Brennstoffzufuhr 32 korrespondiert. Wird als Parameter P die maximale Leistung des Wärmeerzeugers 10 ermittelt, wird das Ventil 22 in den zu 100 % geöffneten Zustand gebracht. Über den Wärmetauscher 12 erwärmt sich das Wasser beispielsweise so, wie in Figur 2 dem Abschnitt A zu entnehmen. Die Auslauftemperatur Ta wird ständig daraufhin abgefragt, ob sie einen stabilen Zustand einnimmt, Schritt 102. Die Abfrage kann beispielsweise dadurch realisiert werden, daß der vorangegangene Wert der Auslauftemperatur Ta mit dem aktuellen Wert der Auslauftemperatur Ta verglichen wird. Bei einer hinreichend langen Übereinstimmung wird auf einen abgeschlossenen Einschwingvorgang geschlossen. Alternativ oder zusätzlich ist auch eine Überwachung des Gradienten der Auslauftemperatur Ta möglich. Hierzu wird die Steigung der Auslauftemperatur zwischen zwei weiter zurückliegenden Stützstellen mit derjenigen zwischen zwei aktuellen verglichen. Stimmen diese Steigungen über eine hinreichend lange Dauer überein oder nehmen sie den Wert Null an, erkennt die Signalverarbeitung 26 auf einen stabilen Betriebszustand. Wenn diese Bedingung erfüllt ist, wird die Solltemperatur Ts mit der Auslauftemperatur Ta verglichen. Ist trotz eingeschwungenem Zustand die Solltemperatur Ts nicht erreicht, wie in Figur 2, Abschnitt B, wird hierauf der Durchflußsollwert Qs verändert, Schritt 104. Der Benutzer möchte in diesem Fall der Brauchwassererwärmung mehr Wasser entnehmen, als dies der Wärmeerzeuger 10 zur gewünschten Solltemperatur Ts zur Verfügung stellen kann. Der Durchflußsteller 14 begrenzt den maximal zulässigen Durchfluß im Sinne des Durchflußsollwerts Qs. Der Durchflußsollwert Qs kann hierzu inkrementell um einen relativ kleinen Wert verringert werden. Denkbar ist es auch, daß die Verringerung des Durchflußsollwerts Qs von der Temperaturdifferenz von Solltemperatur Ts und Auslauftemperatur Ta abhängt. Dank der Durchflußreduzierung ist der Wärmeerzeuger 10 in der Lage, die Auslauftemperatur Ta weiter zu erhöhen. Wiederum wird überprüft, ob die Auslauftemperatur Ta stabil ist. Tritt trotz eingeschwungenem Zustand immer noch eine Differenz zwischen Solltemperatur Ts und Auslauftemperatur Ta auf, wird der Durchflußsollwert Qs sukzessive reduziert oder erhöht, falls die Solltemperatur überschritten ist. Für die praktische Realisierbarkeit ist es ausreichend, wenn die Auslauftemperatur Ta ein um die Solltemperatur Ts liegendes Toleranzband stabil erreicht.

Zur Ermittlung des Parameters P werden Auslauftemperatur Ta, Einlauftemperatur Te und Durchfluß Q erfaßt, Schritt 105. Gegebenenfalls sind sie in einem Speicher zu hinterlegen. In der Signalverarbeitung 26 ist bislang als Kennlinie der Zusammenhang zwischen Durchfluß Q und Temperaturdifferenz von Auslauftemperatur Ta und Einlauftemperatur Te in Abhängigkeit von dem ersten Parameter P0 abgelegt. Die im Schritt 105 erfaßten Werte führen zu einem in Figur 4 mit einem Kreuz markierten Punkt, der nicht auf der bisherigen, mit dem ersten Parameter P0 korrespondierenden Kennlinie liegt. Damit wird signalisiert, daß sich die maximale Leistung des Wärmeerzeugers 10 verschoben bzw. verringert hat. Eine neue Kennlinie, die dem neuen zweiten Parameter P1 zuzuordnen ist, ist so zu wählen, daß sie durch diesen neuen Punkt verläuft. Da ein hyperbelförmiger Zusammenhang besteht, läßt sich diese auch durch den neuen Punkt legen. Eine alternative Bestimmung der neuen Kennlinie besteht darin, den Differenzdurchfluß bei der ermittelten Temperaturdifferenz von Auslauftemperatur Ta und Einlauftemperatur Te gegenüber der bisherigen Kennlinie zu bestimmen. Die neue Kennlinie entsteht nun dadurch, daß die alte Kennlinie um eben diese Durchflußdifferenz verschoben wird. In der Praxis wird die Hyperbel beispielsweise durch lineare Interpolation zwischen einer vorgebbaren Zahl von Stützstellen realisiert. Der zugehörige Durchfluß Q dieser Stützstellen wird um die Durchflußdifferenz verringert. Die Abweichung des Durchflusses Q bei der ermittelten Temperaturdifferenz ist ein Maß für die Änderung der maximalen Leistung des Wärmeerzeugers 10.

Der Parameter P läßt sich auch mathematisch aus folgender Formel bestimmen:

$$P = Q^* (Ta - Te)^*K,$$

wobei K eine Konstante ist, die die spezifische Wärmekapazität von Wasser und den Heizwert des verwendeten Brennstoffs berücksichtigt. In der Signalverarbeitung 26 können für unterschiedliche Parameter P unterschiedliche Kennlinien abgelegt sein. Wird der Parameter P aus obiger Gleichung ermittelt, folgt anschließend eine Auswahl der Kennlinie, deren zugehöriger Parameter P dem ermittelten am nächsten liegt.

Über diese Kennlinie kann beispielsweise der maximal zulässige Durchflußsollwert Qs dem Durchflußsteller 14 in Abhängigkeit von der Temperaturdifferenz von Auslauftemperatur Ta und Einlauftemperatur Te vorgegeben werden, um ein Überzapfen zu verhindern. Auch die Brennstoffzufuhr 32 wird in Abhängigkeit von dem Parameter P über das Ventil 22 die Brennstoffzufuhr 32 beeinflußt.

In einem Speicher ist der zumindest eine erste Parameter P0 hinterlegt, der bislang für die Regelvorgänge gültig war. Nach Ermittlung eines neuen zweiten Parameters P1 ersetzt dieser den alten ersten Parameter P0. Die parameterabhängigen Stell- oder Regelgrößen greifen für weitere Stell- oder Regelungsvorgänge nun auf den aktuellen zweiten Parameter P1 zu. Denkbar ist auch, im Anschluß an eine neue Parameterermittlung eine Routine zu starten, die die parameterabhängigen Stell- oder Regelkenngrößen neu berechnet und abspeichert.

In einem weiteren Ausführungsbeispiel ist vorgesehen, daß der ermittelte aktuelle Parameter P mit einem Grenzwert G verglichen wird. Der Grenzwert G ist so gewählt, daß bei dessen Unterschreiten auf einen kritischen Betriebszustand des Wärmeerzeugers 10 geschlossen wird. Die Signalverarbeitung 26 steuert Anzeigeelemente im Sinne einer Fehlermeldung an. Der Benutzer wird darauf hingewiesen, eine Wartung des Geräts durchzuführen.

**Patentansprüche**

1. Vorrichtung zur Brauchwassererwärmung,

   - mit einem Wärmeerzeuger (10) zum Erwärmen des Wassers,
   - mit einem Sollwertgeber (24), der eine Solltemperatur (Ts) des auslaufenden Wassers vorgibt,
   - mit einem die Auslauftemperatur (Ta) des auslaufenden Wassers erfassenden Auslauftemperatursensor (16),
   - mit einem den Durchfluß (Q) des Wassers erfassenden Durchflußsensor (20), dadurch gekennzeichnet, daß zumindest ein Parameter (P) des Wärmeerzeugers (10) ermittelt ist aus Auslauftemperatur (Ta) und Durchfluß (Q) des Wassers.

2. Vorrichtung nach Anspruch 2, dadurch gekennzeichnet, daß ein Einlauftemperatursensor (18) vorgesehen ist, der eine Einlauftemperatur (Te) erfaßt zur Ermittlung des Parameters (P).

3. Vorrichtung nach einem der vorhergehenden Ansprüche, dadurch gekennzeichnet, daß Auslauftemperatur (Ta) und/oder Einlauftemperatur (Te) und Durchfluß (Q) zur Ermittlung des Parameters (P) dann erfaßt sind, wenn Solltemperatur (Ts) und Auslauftemperatur (Ta) übereinstimmen.

4. Vorrichtung nach einem der vorhergehenden Ansprüche, dadurch gekennzeichnet, daß Auslauftemperatur (Ta) und/oder Einlauftemperatur (Te) und Durchfluß (Q) zur Ermittlung des Parameters (P) dann erfaßt sind, wenn sich die Auslauftemperatur (Ta) im eingeschwungenen Zustand befindet.

5. Vorrichtung nach einem der vorhergehenden Ansprüche, dadurch gekennzeichnet, daß ein Durchflußsteller (14) vorgesehen ist, der den Durchfluß (Q) begrenzt, um eine Übereinstimmung von Solltemperatur (Ts) und Auslauftemperatur (Ta) zu erzielen.

6. Vorrichtung nach einem der vorhergehenden Ansprüche, dadurch gekennzeichnet, daß eine Brennstoffzufuhr (32) des Wärmeerzeugers (10) in Abhängigkeit vom Parameter (P) angesteuert ist.

7. Vorrichtung nach einem der vorhergehenden Ansprüche, dadurch gekennzeichnet, daß der Durchflußsteller (14) im Sinne eines Durchflußsollwerts (Qs) angesteuert ist, der von dem Parameter (P) abhängt.

8. Vorrichtung nach einem der vorhergehenden Ansprüche, dadurch gekennzeichnet, daß der Parameter (P) mit einem Grenzwert (G) verglichen ist und bei dessen Unterschreiten auf einen Fehler des Wärmeerzeugers (10) geschlossen ist.

9. Vorrichtung nach einem der vorhergehenden Ansprüche, dadurch gekennzeichnet, daß als Parameter (P) die maximale Leistung des Wärmeerzeugers (10) ermittelt ist.

10. Vorrichtung nach einem der vorhergehenden Ansprüche, dadurch gekennzeichnet, daß der ursprüngliche Parameter (P0) durch den neu ermittelten Parameter (P1) ersetzt ist.

11. Verfahren zur Brauchwassererwärmung, wobei ein Wärmeerzeuger (10) Wasser erwärmt, über einen Sollwertgeber (24) eine Solltemperatur (Ts) des auslaufenden Wassers vorgegeben wird sowie Auslauftemperatur (Ta) und Durchfluß (Q) des Wassers erfaßt werden, dadurch gekennzeichnet, daß ein Parameter (P) des Wärmeerzeugers (10) aus Auslauftemperatur (Ta) und Durchfluß (Q) ermittelt wird.

12. Verfahren nach Anspruch 11, dadurch gekennzeichnet, daß in einem ersten Schritt der Wärmeerzeuger (10) mit vorzugsweise maximaler Leistung betrieben wird, in einem zweiten Schritt Solltemperatur (Ts) und Auslauftemperatur (Ta) verglichen werden und bei Übereinstimmung von Solltemperatur (Ts) und Auslauftemperatur (Ta) Auslauftemperatur (Ta) und/oder Einlauftemperatur (Te) und Durchfluß (Q) erfaßt werden zur Ermittlung des Parameters (P).

13. Verfahren nach einem der vorhergehenden Ansprüche 11 und 12, dadurch gekennzeichnet, daß bei Abweichen von Solltemperatur (Ts) und Auslauftemperatur (Ta) der Durchflußsollwert (Qs) verändert wird.

14. Verfahren nach einem der vorhergehenden Ansprüche 11 bis 13, dadurch gekennzeichnet, daß Auslauftemperatur (Ta) und/oder Einlauftemperatur (Te) und Durchfluß (Q) dann erfaßt werden zur Ermittlung des Parameters (P), wenn sich die Auslauftemperatur (Ta) im eingeschwungenen Zustand befindet.

Fig. 1

Fig. 2

Fig. 4

Fig. 3